# EUROPEAN PATENT APPLICATION

(11) **EP 2 426 623 A2**
(43) Date of publication of application: **07.03.2012**
(21) Application number: 11171852.4
(22) Date of filing: 29.06.2011
(51) Int. Cl.: G06K 9/22

(54) **Apparatus and method for providing augmented reality using object list**

(30) Priority: 03.09.2010 KR 20100086704
(71) Applicant: Pantech Co., Ltd., Seoul 121-270 (KR)
(72) Inventor: Jang, Joon-Young, 121-270 Seoul (KR); Kim, Kwang-Lea, 121-270 Seoul (KR); Kim, Kwang-Soo, 121-270 Seoul (KR); Kim, Sang-Hyun, 121-270 Seoul (KR); Park, Won-Seok, 121-270 Seoul (KR); Choi, Byoung-Su, 121-270 Seoul (KR); Han, Seung-Youb, 121-270 Seoul (KR)
(74) Representative: Herzog, Markus

(57) **Abstract**

An apparatus to provide augmented reality includes an image acquisition unit to acquire an image including a target object, a supplementary information acquisition unit to acquire supplementary information, an object recognition unit to recognize the target object from the acquired image, and a candidate nomination unit to generate candidate objects based on the supplementary information. A method for providing augmented reality includes transmitting, at a terminal, an image including a target object or supplementary information of the target object, and location information of the terminal to a server; and determining, at the server, whether the target object is recognized, and generating a list of candidate objects based on the supplementary information, if the target object is not recognized.

## Description

### CROSS-REFERENCE TO RELATED APPLICATION

This application claims priority from and the benefit under 35 U.S.C. §119(a) of Korean Patent Application No. 10-2010-0086704, filed on September 3, 2010, which is incorporated by reference for all purposes as if fully set forth herein.

### BACKGROUND

FIELD

The following description relates to an apparatus and method for providing augmented reality, and more particularly, to an augmented reality implementation technology.

DISCUSSION OF THE BACKGROUND

Augmented reality (AR) refers to a computer graphic technique that combines virtual objects or information with a real-world environment to display the virtual elements as if they were present in the real environment.

Unlike a general virtual reality technology which provides virtual objects in a virtual space, AR technology provides a view of reality which may be complemented with virtual objects, thereby capable of providing supplementary information which may be difficult to obtain in reality. In addition, the general virtual reality technology may be limited in application to fields such as, game technology, whereas AR can be applied to various fields. Thus, AR technology has increasingly gained attention as a future display technology suitable for ubiquitous environments.

Generally, in implementation of AR, objects may be recognized based on marker and marker-less system. In an object recognition method using markers or feature points, if a moving object or a group of objects block a part of a marker or a feature point of an object of interest, recognition rate may be significantly reduced or it may not recognize the object of interest, and thereby object information may not be provided to a user.

### SUMMARY

Exemplary embodiments of the present invention provide an apparatus and a method for providing augmented reality through the use of object list.

Additional features of the invention will be set forth in the description which follows, and in part will be apparent from the description, or may be learned by practice of the invention.

Exemplary embodiments of the present invention provide an apparatus to provide augmented reality including an image acquisition unit to acquire an image including a target object; a supplementary information acquisition unit to acquire supplementary information containing location information of a terminal that captures the image of the object; an object recognition unit to recognize the target object from the acquired image; and a candidate nomination unit to nominate at least one or more candidate objects based on the supplementary information if the object recognition unit fails to recognize the target object.

Exemplary embodiments of the present invention provide an apparatus to provide augmented reality, including an image acquisition unit to acquire an image including a first object; a supplementary information acquisition unit to acquire supplementary information containing location information of a terminal that captures the image of the object; an object recognition unit to recognize the first object from the acquired image, and recognize a second object from the acquired image if the object recognition unit fails to recognize the first object; and a candidate nomination unit to, when it fails to recognize the first object but the second object is successfully recognize, nominate at least one or more candidate objects for the first object based on information on at least one of the recognized second object and the acquired supplementary information.

Exemplary embodiments of the present invention provide a terminal to display augmented reality including a camera, an image acquisition unit to acquire an image including a target object through the camera; a first transmission unit to transmit the acquired image including the target object or feature point information of the target object to a server; a second transmission unit to transmit supplementary information including location information of the terminal; a reception unit to receive candidate objects extracted based on the supplementary information from the server; and a display unit to display the received candidate objects to select the target object from the displayed candidate objects.

Exemplary embodiments of the present invention provide a terminal to display augmented reality, the terminal including: a camera, an image acquisition unit to acquire an image including a first object and a second object through the camera; a first transmission unit to transmit the acquired image including a target object or feature point information of the target object to a server; a second transmission unit to transmit supplementary information containing location information of the terminal; a reception unit to receive candidate objects extracted based on information on the second object or the supplementary information from the server; and a display unit to display the candidate objects to select the first object from the displayed candidate objects.

Exemplary embodiments of the present invention provide a method for providing augmented reality including transmitting, at a terminal, an image including a target object or supplementary information containing including feature point information of the target object, and location information of the terminal to a server; and determining, at the server, whether or not the target object is recognized from the image, and if the object is not recognized, generating a list of candidate objects based on the supplementary information, and providing the list of candidate objects to the terminal.

It is to be understood that both foregoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating an apparatus to provide augmented reality (AR) according to an exemplary embodiment of the invention.

FIG. 2 is a block diagram illustrating an apparatus to provide AR according to an exemplary embodiment of the invention.

FIG. 3A and FIG. 3B are diagrams illustrating methods for generating a list of candidate objects according to an exemplary embodiment of the invention.

FIG. 4 is a flowchart illustrating a method for providing AR according to an exemplary embodiment of the invention.

FIG. 5 is a diagram illustrating an AR screen according to an exemplary embodiment of the invention.

FIG. 6 is a block diagram illustrating an AR display terminal according to an exemplary embodiment of the invention.

### DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

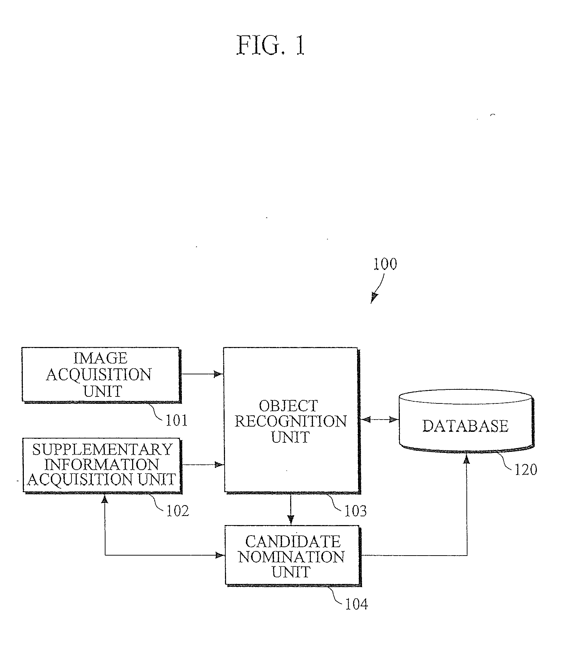

FIG. 1 illustrates an apparatus to provide augmented reality (AR) according to an exemplary embodiment of the invention. Referring to the example illustrated in FIG. 1, the apparatus 100 may display a combination of a captured image including an object of interest and information related to the object by superimposing the AR information as a layer over the object. For example, the apparatus 100 may recognize an object of interest in an image, and provide related AR data corresponding to the recognized object.

The apparatus 100 may be employed in various applications including a mobile terminal (such as a smart phone) having a camera module and a display module, or a server connected to the mobile terminal, which can communicate with the mobile terminal. For example, if a mobile terminal captures an image and transmits the image to a server, the server may process the image to recognize a target object in the image, and transmits AR data of the recognized target object to the mobile terminal to display the AR data on the mobile terminal. However, the example with a server is provided for convenience of explanation, and the mobile terminal may extract AR data and display the AR data by itself without a server.

As shown in FIG. 1, the apparatus 100 includes an image acquisition unit 101, a supplementary information acquisition unit 102, an object recognition unit 103, and a candidate nomination unit 104. In addition, the apparatus 100 further includes a database 120. The database 120 may store various information of an object, such as, image information of an object, location information of the object, information on a feature point of the object, illuminance information of the object, and the like. In an example, illuminance information may be a measure of luminous flux incident on a unit area of a surface.

In an example, the image acquisition unit 101 may acquire an image including a target object. The target object may be any object in which a user may be interested. For example, if a user captures an image of a particular area, the target object may be a building block or any particular object in the image. In the example, if the apparatus 100 is employed in a mobile phone, the image acquisition unit 101 may include a camera module embedded in the mobile phone. Alternatively, if the apparatus 100 is employed in a server, the image acquisition unit 101 may be a communication module that receives image data which includes the target object from a mobile terminal.

The supplementary information acquisition unit 102 may receive supplementary information including location information of the mobile terminal, image capturing direction information, illuminance information, and the like. In an example, the location information of the terminal may be global positioning system (GPS) coordinates, the image capturing direction information may be an azimuth angle of the object, and the illuminance information may be brightness information of the object.

The object recognition unit 103 may recognize the target object in the acquired image based on image processing. For example, the object recognition unit 103 may compare the image of the target object acquired by the image acquisition unit 101 with an image of a corresponding object stored in the database 120 on the basis of feature points used to recognize the target object. In an example, the feature points may include a shape of a building, a phone number shown on a sign, or other distinctive features of an object.

Alternatively, in certain instances the object recognition unit 103 may use the supplementary information obtained by the supplementary information acquisition unit 102 to determine a list of possible candidate objects for comparison and extract the list of candidate objects from the database 120, for comparison with the target object. The list of candidate objects may include the target object, which may be selected by the user from the list by a user or automatically selected based on reference criteria. For example, if the object recognition unit 103 is unable to recognize the target object included in the acquired image using the feature points of the target object, then the object recognition unit 102 may use the supplementary information to determine a list of possible candidate objects on the basis of the supplementary information, such as the location information.

If the object recognition unit 103 recognizes a target object, AR information related to the recognized target object may be provided. For example, if the apparatus 100 is employed in a server, AR information related to the target object may be transmitted to a mobile terminal, and the mobile terminal may combine the received AR information into the image including the relevant target object.

However, if the object recognition unit 103 cannot recognize the target object because the acquired image is not sufficiently clear, for example if insufficient numbers of feature points are extracted, or for any other reasons, the candidate nomination unit 104 may use the supplementary information to nominate a group of candidate objects. From the nominated group of candidate objects, the target object may be selected.

In an example, the candidate nomination unit 104 may extract images of candidate objects, of which may include an image of the target object, from the database 120 based on GPS coordinates of the mobile terminal and an azimuth angle of the target object (i.e. a general location of an object). Further, the candidate nomination unit 104 may then nominate object candidates corresponding to the extracted images of candidate objects as candidate objects. That is, in image-based image recognition, if the image recognition fails to recognize the target object in the acquired image, a range of candidate object images including the target object may be provided for comparison based on the acquired supplementary information. As a result, all or some object candidates included within the extracted range of candidate object list may be nominated as candidate objects.

In another example, the candidate nomination unit 104 may primarily extract images of candidate objects as described above, and compare the target object included in the acquired image with the extracted candidate object images to calculate a similarity. In an example, the candidate nomination unit 104 may extract images of candidate objects, of which may include an image of the target object, from the database 120 based on supplementary information. Then the extracted images of candidate objects are compared with the image of the target object to calculate a similarity. The calculated similarity may indicate a likelihood of matched identity between the target object included in the acquired image and the extracted images of candidate objects. After the primary extraction of the candidate object images, the candidate nomination unit 104 may secondarily filter out candidate object images having a similarity greater than a reference threshold to provide a list of the candidate object images in the order of similarity. In the example illustrated in FIG. 1, the similarity may be defined by various methods. For example, differences of pixel values between images may be squared and averaged to obtain the similarity. In another example, similarity of an image is judged in terms of number of identical feature points present between the candidate object image and the image of the target object.

Hereinafter, an example of the apparatus 100 employed in a server will be described. If a server receives an image including a target object from a mobile terminal, the server may transmit AR information related to the included target object. However, if the target object in the image cannot be recognized accurately, the server may not transmit the AR information of the target object to the mobile terminal. However, in an example, even if the target object may not be accurately recognized, a list of object candidates that may be the target object based on general location information of the acquired image may be transmitted to the mobile terminal. Accordingly, the user may select the correct target object from the received list of candidate objects and allow implementation of AR with respect to the selected target object.

In addition, if the apparatus 100 is employed in a mobile terminal, a list of candidate objects may be displayed in a display module of the mobile terminal if the target object in the acquired image cannot be accurately recognized. Then, a user may select the correct target object from the list of candidate objects, and thereby allow implementation of AR with respect to the selected target object.

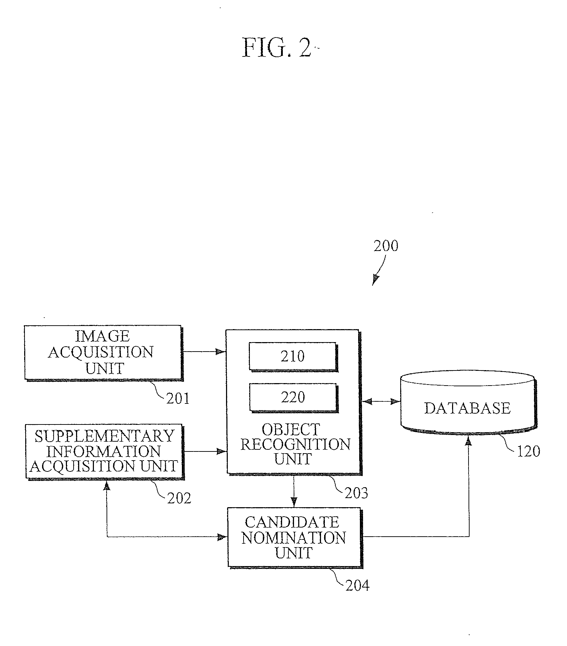

FIG. 2 illustrates an apparatus to provide AR according to an exemplary embodiment of the invention.

Referring to the example illustrated in FIG. 2, the apparatus 200 may include an image acquisition unit 201, a supplementary information acquisition unit 202, an object recognition unit 203, and a candidate nomination unit 204. In addition, the object recognition unit 203 may further include a first object recognition unit 210 and a second object recognition unit 220. Also, the apparatus 200 further includes a database 120.

The image acquisition unit 201 may acquire an image containing a target object. The target object may be any object that interests a user. For example, in an image of a particular area captured by a user, the target object may be a building block or the like. In the example illustrated in FIG. 2, if the apparatus 200 is employed in a mobile terminal, the image acquisition unit 201 may include a camera module embedded in the mobile terminal, or if the apparatus 200 is employed in a server, the image acquisition unit 101 may be a communication module that receives image data of an object from a mobile terminal.

The supplementary information acquisition unit 202 may receive supplementary information including location information of the mobile terminal, image capturing direction information, and illuminance information of the object. The location information of the terminal may be GPS coordinates, the image capturing direction information may be an azimuth angle of the object, and the illuminance information may be brightness information of the object.

The first object recognition object 210 of the object recognition unit 203 may recognize a first object from the acquired image. The first object may refer to the target object. The second object recognition unit 220 of the object recognition unit 203 may recognize a second object near the first object in the same acquired image if the first object recognition unit 210 fails to recognize the first object. For example, if the first object is located in a margin of the acquired image and the target object appears unclearly as a result, then the recognition of the first object may fail. If the recognition of the first object fails, the object recognition unit 203 may successfully recognize the second object that may be located in the center of the image and hence appears more clearly.

As the functions of the candidate nomination unit 204 and the database 120 in FIG. 2 are substantially equivalent to those of the above-described embodiment in FIG. 1, the description thereof will be omitted.

In an example, if the target object is unable to be recognized, the candidate nomination unit 204 may use the supplementary information and/or the second object recognized by the second object recognition unit 220 to provide a list of candidate object for the target object.

For example, the candidate nomination unit 204 may extract objects present around the recognized second object from the database 120 and provide the extracted objects as candidate objects. In addition, the candidate nomination unit 204 may extract objects that are in reference proximity to the recognized second object as candidate objects. In another example, preliminary candidate objects may be extracted based on the supplementary information, and the preliminary candidate objects may narrow the number of candidates to only the candidate objects located in a reference proximity to the recognized second objects to provide a final list of candidate objects. In this case, location information of the recognized second object may have been previously stored in the database 120 or the mobile terminal.

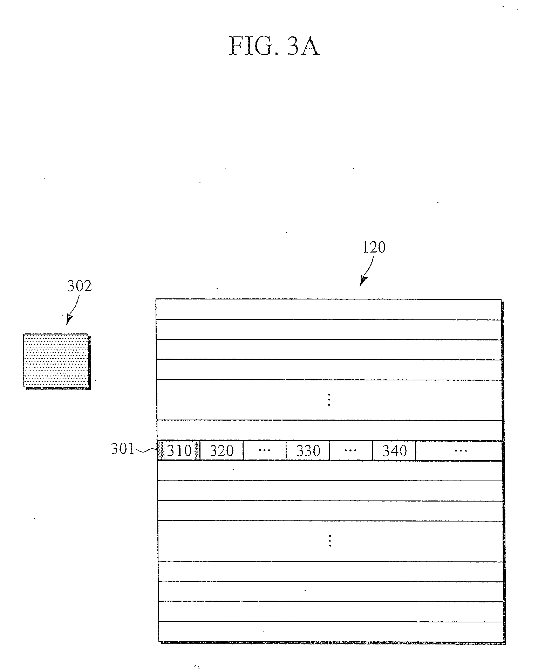

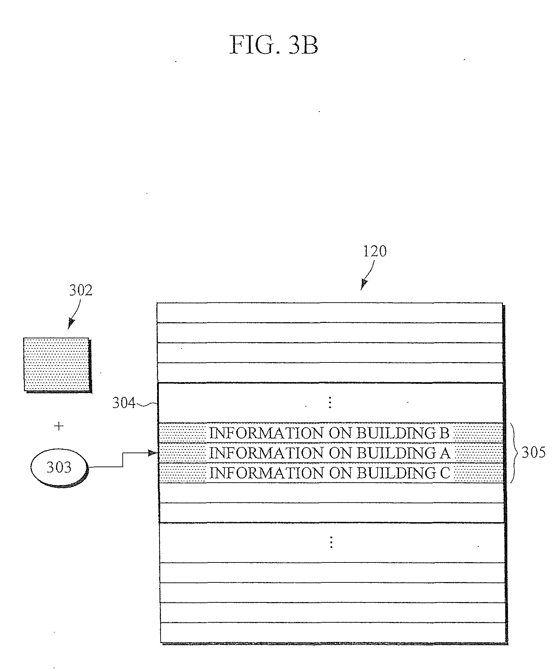

FIG. 3A and FIG. 3B illustrate diagrams for explaining a method for generating a list of candidate objects according to an exemplary embodiment of the invention.

In the example illustrated in FIG. 3A, object recognition is performed based on image processing. The example illustrated in FIG. 3A is described under the assumption that a database 120 stores AR information 301 of a building A which may include an image 310, a name 320, a location 330, and date of construction of the building A 340. In addition, the database 120 may store an image 302 of the building A acquired by the image acquisition unit 101 or 201. If the image 302 is clear to allow recognition of the target object building A, the object recognition unit 103 and 203 (see FIG. 1 and 2) may scan the database 120 to extract information 301 of the building A including the image 310 of the building A and provide the extracted image 310 as AR data. However, if the image 310 of the building A is not clear, the object recognition unit 103 and 203 may be unable to recognize the building A as the target object and the object recognition unit 103 and 203 may not extract the information 301 as a result. In this case, the apparatus 100 and 200 shown in the example illustrated in FIG. 1 and FIG. 2 may make a list of candidate objects with respect to the building A as shown in the example illustrated in FIG. 3B, and provide the list.

In the example illustrated in FIG. 3B, if the image 302 of the building A is not clear or there are insufficient number of feature points in the image 302 to recognize building A, a group of candidate objects may be extracted based on general location information 303 of building A. The general location information 303 of the building A may be an azimuth angle of the building A that may be based on a terminal that captures the image of the building A and GPS coordinates of the terminal. The general location information 303 may be obtained from the supplementary information acquisition unit 102 and 202 as shown in the example illustrated in FIG. 1 and FIG. 2. If the general location information 303 is obtained for building A, information 304 on buildings located within a reference proximity to building A may be extracted. By use of all or some of extracted information 304, a list 305 of candidate objects (for example, a building A, a building B, a building C, and so on) corresponding to the unclear image 302 may be provided.

Moreover, although not illustrated, if the target object building A is not clearly shown but buildings B and C are more clearly shown in the image 302, the building B and the building C may be recognized and the list of candidate objects 305 including the recognized buildings B and C are selected to be provided as a list of candidate objects.

As such, even if the object recognition unit 103 or 203 fails to recognize the target object building A based on the received image 302, a list 305 of candidate objects corresponding to the received image 302 may be provided using the supplementary information 303 or through the identification of secondary objects that are within a reference proximity from the target object, and thus a user may be able to identify the target object from the provided list of candidate objects 305 and thus be provided with AR information for the target object.

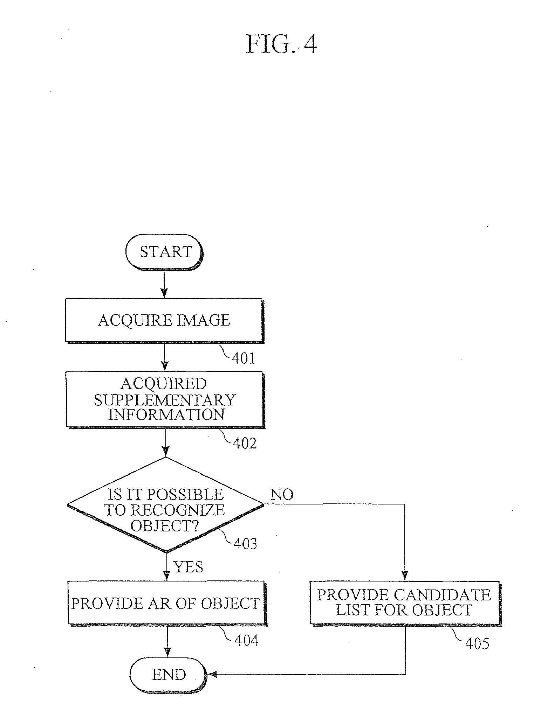

FIG. 4 illustrates a flowchart of a method for providing AR according to an exemplary embodiment of the invention. An example of the method for providing AR will now be described below with reference to FIG. 1, FIG. 2, FIG. 3A, FIG. 3B, and FIG. 4.

An image of an object is acquired (401). For example, the image acquisition unit 101 or information acquisition unit 201 may acquire an image 302 including a first object. In an example, the first object may be a target object.

Then, supplementary information of the first object is acquired (402). For example, the supplementary information acquisition unit 102 or supplementary information acquisition unit 202 may acquire supplementary information including image information of the first object, location information of the first object, information on a feature point of the first object, illuminance information of the first object, and the like.

Subsequently, it is determined whether the object is recognizable (403). For example, the object recognition unit 103 or object recognition unit 203 may search the database 120 for the target object based on the received image 302 to find whether the database 120 stores information on the target object from the received image 302. In an example, the object recognition unit 103 or object recognition unit 203 may define a range of candidate objects for comparison using the acquired supplementary information and then compare feature points between candidate object images within the defmed range and the target object to determine whether or not the target object from the acquired image can be recognized.

If the object is recognizable, AR information corresponding to the recognized object is provided (404) to the acquired image.

If the object cannot be recognized, a list of candidate objects for the object is provided (405). The candidate list may be a group of candidate objects which may be identified as the target object in the image.

Exemplary methods for extracting a candidate object from the database 120 may vary as described below.

In one example, a list of candidate objects may be extracted using obtained supplementary information. That is, if image-based object recognition step 403 is performed and the object recognition fails to recognize the target object from the candidate object images within a defined range according to the supplementary information, all or some objects included in the images within the defined range may be extracted as the candidate objects. For example, if location information of a terminal is acquired, stored candidate object images of candidate objects located within a reference proximity of the terminal location may be extracted from the database 120 and provided as the candidate objects.

In another example, if the object recognition unit 103 or object recognition unit 203 fails to recognize the first object, which may be a target object, but successfully recognizes a second object, which may be a non-target object located within the acquired image containing target object, objects near the recognized second object may be extracted from the database 120. In the example illustrated in FIG. 3B, a building C and a building D next to the building A may be recognized as the second objects. Accordingly, an object entry 304, which is present in the database 120 and is determined to be within reference proximity, such as a geographic proximity, may be extracted as a candidate object.

In another example, a primary range for a group of candidate objects may be defined using the supplementary information such as location information of a terminal, and a secondary range for the group of candidate objects may be defined using information related to the second objects which are successfully recognized. For example, in the example illustrated in FIG. 3B, the primary range 304 may be defined using the location information of the terminal and the image capturing direction information, and the secondary range 305 may be defined using the recognized second objects building C and building B.

Moreover, the extracted candidate objects may be ranked based on a reference similarity threshold and may be provided in order of the rank for user selection. In an example, the similarity threshold may refer to a level of identification that can be made by comparing the acquired image and the image stored in the database 120. Further, the similarity threshold may be defined on the basis of the number of feature points matched between the obtained image and the image stored in the database 120. Alternatively, feature points may be assigned a value based on the type of the feature point, and the total point value may determine the similarity level. For example, if multiple candidate objects are extracted based on the supplementary information or the successfully recognized non-target objects, the candidate objects may be arranged in the order of similarity, such as the number of matched feature points or the total point value of the matched feature points.

As described above, if the candidate objects are provided, the candidate objects may be displayed to the user and the user may select one candidate object from the displayed list of candidate objects as the target object. Accordingly, AR information corresponding to the selected target object may be provided as a result.

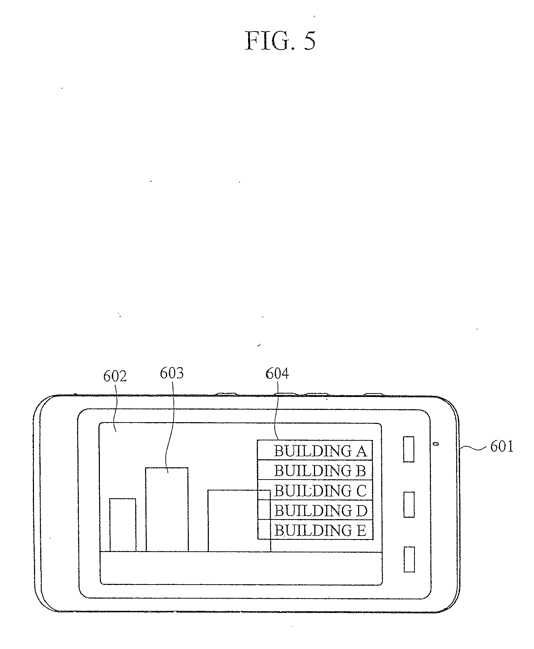

FIG. 5 is a diagram illustrating an AR screen according to an exemplary embodiment of the invention. Referring to the example illustrated in FIG. 5, the user runs an image-based AR application to obtain information of a target object 603, and captures an image of the object 603. Accordingly, the resultant image of the object 603 is displayed on a preview image 602. In an example, if the image of the object 603 is not clearly captured and the image-based AR application is unable recognize the object 603 accurately, a list of candidate objects 604 for the object 603 may be provided based on information on an approximate location of the object 603. Alternatively, the list of candidate objects 604 for object 603 may be provided based on a reference geographic proximity to a recognized non-target object in the preview image 602. Thus, the user may select an object corresponding to the object 603 from the candidate list 604, and AR data related to the selected object is allowed to be displayed in the final AR image.

In an example, the approximate location information of the object 603 may be obtained using GPS coordinates and azimuth angle of a mobile terminal 601 using a GPS module embedded in the mobile terminal 601. In addition, feature points (for example, a shape of a building, a phone number shown on a sign) of the target object 603, which may be still identifiable even if the target object itself may not be, may be extracted and a candidate list 604 may be generated based on the extracted information.

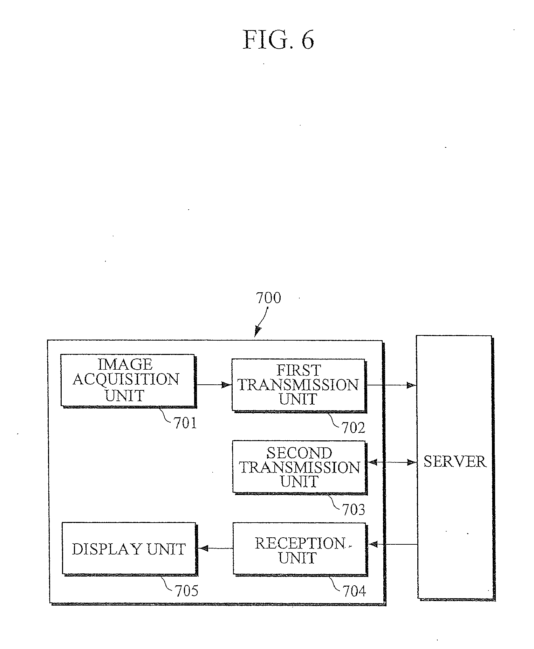

FIG. 6 illustrates an AR display terminal according to an exemplary embodiment of the invention. Referring to the example illustrated in FIG. 6, the terminal 700 includes an image acquisition unit 701, a first transmission unit 702, a second transmission unit 703, a reception unit 704, and a display unit 705.

The image acquisition unit 701 may acquire an image of a target object through a camera. The acquired image may further include other non-target object(s) in addition to the target object. The first transmission unit 702 may transmit the image including the target object or the feature point information of the target object to a server. Then, the second transmission unit 703 may transmit supplementary information including location information of the terminal, image capturing direction information, illuminance information, and other relevant information. If the server can recognize the object by use of the received information transmitted by the first transmission unit 702, AR information with respect to the recognized target object may be enabled to be displayed in the display unit 705. However, if the image of the target object is not clear or feature point information is not sufficient to recognize the target object, the server may use information of a non-target objects that are recognized successfully from the acquired image, or supplementary information provided by the second transmission unit 703 to generate candidate object for the object. The reception unit 704 may receive the generated candidate object from the server. Then, the display unit 705 may display the received candidate objects to allow the user to select a candidate object as the target object. In addition, the display unit 705 may rank or list the received candidate objects to display. Alternatively, based on the ranking of the list of the candidate objects, the user terminal may select the highest ranking candidate object as the target object automatically or upon a user's instruction.

As described above, even if the target object cannot be recognized from the acquired image, a group of candidate objects may be provided. Accordingly, AR can be still be implemented based on the provided group of candidate objects. More specifically, an approximate location of the target object may be recognized, and a list of candidate objects for the recognized object may be provided based on the location information. Approximate location information of the target object may be provided by the supplementary information or through the recognition of a non-target object in the acquired image.

The current embodiments can be implemented as computer readable codes in a computer readable record medium. Codes and code segments constituting the computer program can be easily inferred by a skilled computer programmer in the art. The computer readable record medium includes all types of record media in which computer readable data are stored. The computer readable code may be executed by a computer having a processor and memory.

Examples of the computer readable record medium include a read-only memories (ROM), a random-access memory (RAM), a compact disc (CD) ROM, a magnetic tape, a floppy disk, and an optical data storage. Further, the record medium may be implemented in the form of a carrier wave such as Internet transmission. In addition, the computer readable record medium may be distributed to computer systems over a network, in which computer readable codes may be stored and executed in a distributed manner.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
An apparatus to provide augmented reality includes an image acquisition unit to acquire an image including a target object, a supplementary information acquisition unit to acquire supplementary information, an object recognition unit to recognize the target object from the acquired image, and a candidate nomination unit to generate candidate objects based on the supplementary information. A method for providing augmented reality includes transmitting, at a terminal, an image including a target object or supplementary information of the target object, and location information of the terminal to a server; and determining, at the server, whether the target object is recognized, and generating a list of candidate objects based on the supplementary information, if the target object is not recognized.

## Claims

1. An apparatus to provide augmented reality (AR), comprising:
an image acquisition unit adapted to acquire an image comprising a first object;
a supplementary information acquisition unit adapted to acquire supplementary information comprising location information of a terminal that captures the image of the first object;
an object recognition unit adapted to recognize the first object from the acquired image; and
a candidate nomination unit adapted to nominate at least one candidate object for the first object based on the supplementary information and/or information on a second object recognized by the object recognition unit from the acquired image, if the object recognition unit fails to recognize the first object.

2. The apparatus of claim 1, wherein the candidate nomination unit is adapted to nominate candidate objects in a region corresponding to the location information of the terminal, and further is adapted to extract candidate objects from a database, and to display the extracted candidate objects to select the first object from the candidate objects.

3. The apparatus of claim 1 or 2, wherein the object recognition unit is adapted to recognize the target object from the acquired image by extracting feature point information of the target object, and to compare the feature point information of the target object identified in the acquired image with feature point information of candidate objects stored in a database.

4. The apparatus of any of claims 1 to 3, wherein the candidate nomination unit is adapted to nominate the candidate objects based on the supplementary information; and further is adapted to define similarities of the first object with the candidate objects by comparing feature points between the first object and the candidate objects, to extract the candidate objects that meets or exceeds a reference similarity threshold, and to display the extracted candidate objects.

5. The apparatus of any of claims 1 to 4, wherein the supplementary information further comprises direction information or illuminance information of the acquired image.

6. A terminal to display augmented reality (AR), comprising:
a camera;
an image acquisition unit adapted to acquire an image comprising a first object through the camera;
a first transmission unit adapted to transmit the acquired image comprising the first object or feature point information of the first object to a server;
a second transmission unit adapted to transmit supplementary information comprising location information of the terminal;
a reception unit adapted to receive candidate objects extracted based on information on a second object comprised in the acquired image and/or the supplementary information from the server; and
a display unit to display the candidate objects to select the first object from the displayed candidate objects.

7. A method for providing augmented reality (AR), comprising:
transmitting, at a terminal, an image comprising a target object or supplementary information comprising feature point information of the target object, and location information of the terminal to a server; and
determining, at the server, whether the target object is recognized from the image, and if the target object is not recognized, generating a list of candidate objects based on the supplementary information, and providing the list of candidate objects to the terminal.

8. The method of claim 7, wherein determining whether the target object is recognized from the image comprises:
acquiring the image comprising the target object or the feature point information of the target object;
acquiring the supplementary information; and
recognizing the target object from the image, if a matching image of the target object is found in a database.

9. The method of claim 8, wherein recognizing the target object comprises:
extracting feature point information of the target object from the acquired image, and comparing the feature point of the target object identified in the acquired image with the feature point of candidate object stored in the database.

10. The method of any of claims 7 to 9, wherein providing the list of candidate objects comprises:
comparing feature points between the target object and the generated candidate objects;
filtering out the candidate objects that meet or exceed a reference similarity threshold from the generated candidate objects; and
providing the filtered candidate objects.

11. The method of any of claims 7 to 10, wherein generating the list of candidate objects comprises:
nominating the candidate objects wherein the target object is expected to be present based on the location information of the terminal;
extracting candidate objects from the server; and
listing extracted candidate objects as the list of candidate objects.

12. The method of claim 7, wherein generating the list of candidate objects comprises:
acquiring an image comprising a first object and a second object;
acquiring the supplementary information;
recognizing the first object from the acquired image, and if the first object is not recognized, recognizing the second object from the acquired image; and
listing at least one candidate object for the first object based on at least one of the acquired supplementary information and information on the recognized second object, the listing of at least one candidate object for the first object preferably comprising extracting candidate objects in an area or a region wherein the first object is expected to be present using the information on the recognized second object or the location information of the terminal, and listing the extracted objects as the candidate objects.

13. The method of claim 12, wherein recognizing the first object and second object comprises extracting the feature point information of the first object or the second object from the acquired image, and recognizing the first object or the second object by comparing the feature point information of the first object or the second object identified in the acquired image with the feature points of candidate objects stored in the database.

14. The method of claim 13, wherein providing the list of candidate objects comprises:
nominating the candidate objects based on the supplementary information; comparing feature points between the candidate objects and the feature point information of the first object or second object identified in the image; extracting the candidate objects that meets or exceeds a reference similarity threshold;
listing the extracted candidate objects; and
providing the listed candidate objects to the terminal.

15. The method of any of claims 7 to 14, further comprising:
displaying, at the terminal, the provided list of candidate objects,
the terminal preferably displaying a candidate list having candidate objects whose display order is determined according to the level of similarities, and the level of similarity preferably being defined on the basis of the number of feature points matched between the first object and candidate objects stored in the database.
